# EUROPEAN PATENT APPLICATION

(11) **EP 1 717 172 A1**
(43) Date of publication of application: **02.11.2006**
(21) Application number: 06252233.9
(22) Date of filing: 26.04.2006
(51) Int. Cl.: B65G 69/00, B60T 3/00

(54) **Device for immobilising a vehicle**

(30) Priority: 29.04.2005 GB 0508899
(71) Applicant: CASTELL SAFETY INTERNATIONAL LIMITED, London NW9 9PQ (GB)
(72) Inventor: Milner, David Anthony, Peterborough PE7 3PB (GB); Drummond, Michael, Hillingdon UB10 9 LU Middlesex (GB); Foulger, David Leslie, Great Notley CM77 7FY (GB); Cowen, Nicholas, Hertfordshire (GB); Harker, Benjamin, Harleston IP20 9ES (GB)
(74) Representative: Godwin, Edgar James

(57) **Abstract**

An immobilising device has a driving mechanism (16) which urges two members or chocks (1, 2) towards each other to clamp a vehicle wheel between them. A detector, including a spring (21), detects engagement between the chocks (1, 2) and the wheel, in particular when the force applied by the driving mechanism exceeds a threshold, and permits operation of an auxiliary device, e.g. comprising a spring-loaded pin (29), to prevent movement of the chocks (1,2) away from each other.

## Description

This invention relates to a device for immobilising a vehicle and to apparatus for preventing a vehicle from being driven away from a loading bay during loading/unloading.

The normal sequence of events is that a vehicle (a semi-trailer, a drawbar trailer, or a lorry) is driven up to a loading bay and the driver contacts staff in the building. The loading bay has a door, usually of the 'up and over' type, and a dock leveller. The dock leveller is a powered ramp which is adjusted in height to accommodate differences in vehicle loading heights and to enable forklifts to drive from the building into the vehicle. To prevent accidents several safeguards are currently employed. Current systems include:
- Traffic lights, some of which are linked to the dock leveller. This does not prevent the driver from moving off but relies upon him obeying the lights. These systems are quite expensive.
- A traffic barrier system which retains the vehicle at the loading bay until a barrier is raised. This also relies upon correct procedure and is expensive.
- An inbuilt wheel blocking device which is installed in the ground at each bay and which is raised to prevent the vehicle from leaving until loading is complete. This is very expensive and also relies upon correct procedure to be effective.
- A wheel clamp which is fitted when the vehicle arrives and which provides a physical and visual barrier to indicate to the driver that he/she should not drive off. This also relies upon procedures and is cumbersome to operate.

It would be desirable to be able to provide apparatus for preventing a vehicle from being driven away from a loading bay during loading/unloading. It would also be desirable to provide a device for immobilising a vehicle for that purpose or for other safety or security purposes.

The present invention provides a device for immobilising a wheeled vehicle, comprising:
a first member engageable with a first portion of a vehicle wheel, the first portion being on the outer periphery of the wheel,
a second member engageable with a second portion of the wheel,
drive means for urging the first and second members towards each other so as to clamp part of the wheel between them,
detector means for detecting engagement of the first and second members with the wheel, and
auxiliary means operable to prevent movement of the first and second members away from each other, the auxiliary means being operable only when engagement of the first and second members with the wheel has been detected.

The drive means may comprise a driving screw and a nut threaded thereon, a piston-and-cylinder device (in which case the detector means may detect a fluid pressure in the cylinder or in a fluid circuit connected to the cylinder), a ratchet-and-pawl device, or a lever and a linkage, for example.

In the context of immobilising a vehicle in a loading bay, the principle of the immobilising device is that the first and second members have to be fitted to a wheel of the vehicle and only when they have engaged the wheel (to prevent removal of the immobilising device by a person) can the loading/unloading process begin.

The invention provides apparatus for preventing a vehicle from being driven away from a loading bay during loading/unloading, comprising:
the immobilising device; and
a loading bay device which is operable to selectively enable and disable use of the loading bay for loading/unloading;
the immobilising device including a first blocking device having an unblocking state, allowing operation of the auxiliary means and cancellation of the said operation, and a blocking state preventing cancellation of the said operation;
the loading bay device including a second blocking device having a blocking state, preventing the loading bay device from enabling use of the loading bay, and an unblocking state allowing the loading bay device to enable use of the loading bay;
the apparatus including:
   communication means for communicating between the immobilising device and the loading bay device; and
   control means for controlling the first and second blocking devices;
   the control means being arranged to perform the following functions:
      detecting the state of the first blocking device,
      detecting the state of the second blocking device,
      causing the second blocking device to change from the blocking state to the unblocking state when it is detected that the first blocking device has changed from the unblocking state to the blocking state, and
      causing the first blocking device to change from the blocking state to the unblocking state when it is detected that the second blocking device has changed from the unblocking state to the blocking state.

The communication means may comprise a cable, preferably carried by a retracting device which keeps the immobilising device out of contact with the ground when not in use. The communication means may include a transmitter/receiver on the immobilising device and a transmitter/receiver on the loading bay device. There may be wireless communication between the transmitters/receivers.

A first embodiment of the immobilising device requires a pinching force to be applied between two chocks or between a single chock and some other reactive member. The pinching force is created with a multi-start screw thread driving two sliding, telescopically interconnected supports together. Within the device is a spring mechanism in which a spring is stressed by the reactive force experienced as the movement of one support relative to the other encounters resistance. This resistance comes from contact on both sides of the tyre. This spring is stressed further as the force is increased and, at a predetermined load, allows a latch to be sprung between the two sliding supports, securing them together and preventing relative movement. An indicator can be provided to indicate when this has occurred. Only when the latch springs into place and secures the two supports together, can a key can be turned. Turning this key engages a cam into a slot in the latch shaft and, thereby, locks the latch in place. The key may then be taken to the loading bay to enable the loading process. A preferred feature of the device is the swivelling design of at least one of the chocks which, through the design of its profile, makes it difficult to replace the tyre of a vehicle with some other object such as a block of wood. This is an anti-tamper feature.

A second embodiment has two relatively sliding supports clamping two chocks. However, the force is created with a pneumatic pump and an actuating cylinder. The release of a key is only achievable when a predetermined air pressure has been generated within the pneumatic circuit which actuates a piston within an auxiliary cylinder to enable the key to be turned and released. An indicator can be provided to indicate when the predetermined pressure has been reached. Turning the key closes a valve to prevent loss of pressure from the pneumatic circuit, and the chocks remain clamped to the wheel whilst the key is removed. When the key is returned, it is used to open the circuit to atmosphere. Further preferred features are an anti-tamper chock, as described above, and a dump valve which opens the pneumatic circuit to atmosphere if the chocks travel too close together. This latter feature is to prevent the chocks being operated to their stops, without a wheel being present, and the pressure being built up to release the key illegally.

A variant of both embodiments is the replacement of the key release with a sensing switch and solenoid unit. The solenoid locks the latch in place, or closes the valve, when the predetermined pinching force is achieved. The sensing switch sends a signal to the loading bay equipment (by an umbilical cable or wireless communication) to indicate when the chock is fitted and is locked by the solenoid. This signal allows the loading bay equipment (door, dock leveller, etc.) to be activated and, when activated, it opens a contact to cut off power from the solenoid circuit, preventing its operation. When the loading is completed the door is closed or the leveller is stowed and the contact is closed, restoring power to the solenoid circuit. The solenoid can then be energized, via a push button switch on the immobilising device, and the latch can then be lifted, or the valve opened, and the chocks moved apart and removed from the wheel.

A further variant is to replace the two chocks with a single chock reacting against another member either on the other side of the wheel or within the wheel rim.

A further embodiment includes an umbilical cable, capable of transmitting electrical signals and power, that connects the immobilising device to loading bay apparatus inside a building, and means by which the necessary length of umbilical cable can be stowed and protected from damage; and a loading bay device that switches power to the loading bay apparatus, releases the loading bay door and/or the dock leveller, and switches the traffic lights, or any combination of these.

In this embodiment, a two-position switch is locked in a first position until the immobilising device is fitted. Only then does it become possible to move the switch to the second position. In the second position the switch sends a signal into the building, down the umbilical cable, to the loading bay device. If and when it receives an appropriate signal from the loading bay device, the blocking device within the immobilising device locks the immobilising device on and prevents its removal from the wheel. Whilst this signal is present the switch cannot be returned to the first position. The immobilising device may also comprise a visual display indicating its status and the status of the loading bay device.

The umbilical cable comprises an electrical cable containing a sufficient number of cores to carry command signals, status signals, and actuating electrical power. Shielding of the cable is sufficient to withstand overriding by heavy goods vehicle. Means are provided for retaining the cable when not in use such that it does not come into contact with the vehicle or the ground. The cable is securely attached to a manifold on the side of the building and the immobilising device. The cable retaining means allows a driver to manually move the immobilising device, attached to the free end of the cable, out to one wheel of the trailer.

The loading bay device comprises a device to switch power to a dock leveller and optionally lock it in a retracted position and/or a device to lock closed a loading bay door and/or a device to switch traffic lights between red and green, an inhibiting means such that an electrical signal is required to enable the dock leveller to be supplied with power (and unlocked) and/or the door to be unlocked and/or the traffic lights to be switched to red, and means for sending an electrical signal to the immobilising device when the dock leveller is supplied with power (and unlocked), the loading door is unlocked and/or the traffic lights are switched to red. The loading bay device may also comprise a visual display indicating its status and the status of the immobilising device.

In the initial state of the safety apparatus in this embodiment, the loading bay device is inoperative: the door is locked closed and/or the traffic lights are locked onto green and/or the stowed dock leveller is isolated from the power supply (and locked). The immobilising device is stowed so that it cannot be damaged. The switch in the immobilising device is in the first position and is inhibited from being moved to the second position. The displays on the loading bay device and the safety device are green.

When a trailer is parked at the loading bay, the immobilising device is fitted, enabling the switch to be moved to the second position. This sends a "safe" signal to the loading bay device. The displays on the loading bay device and the immobilising device change to amber.

In response to the "safe" signal, the loading bay device is unblocked and use of the loading bay is enabled. The door is unlocked and/or the traffic lights are switched to red and/or power is switched to the dock leveller (and it is unlocked). The blocking device in the immobilising device now prevents its removal from the wheel. The displays on the loading bay device and the immobilising device have changed to red.

On completion of the loading or unloading process the door is locked closed and/or the traffic lights are locked onto green and/or the dock leveller locked in the stowed position is isolated. This unblocks the immobilising device, which can then be removed from the wheel and returned to its retracted position. These actions also turn the displays on the loading bay device and the immobilising device back to green and make it safe to move the trailer.

### Benefits:-

- A low cost interlocking system to prevent trailer 'drive-aways'.
- A true interlock ensuring interaction between the loading process and the movement of the trailer.
- The location of the cable can ensure that only the immobilising of the trailer being loaded can trigger the loading process.
- The cable prevents loss or theft of the immobilising device.
- The driver does not need to enter the building and operatives inside the building do not need to leave it.

In a further embodiment, wireless communication is used instead of a cable. The immobilising device additionally includes a transmitter and receiver device and a battery power supply. When the switch is in the second position a coded signal is transmitted to the loading bay device. If and when an appropriate signal is received from the loading bay device, the immobilising device is locked onto the wheel, preventing its removal. Until it receives an 'unblocking' signal the switch cannot be returned to the first position. In this embodiment the loading bay device additionally includes a transmitter and receiver device.

The second embodiment provides the following additional benefits:
- The cost of an umbilical cable is avoided.
- The location of a wireless communication aerial can ensure that only a trailer parked at a particular bay can facilitate loading operations of that individual bay.
- Radio frequency transmission from the immobilising device can be used to locate the immobilising device and prevent its theft or removal from site.

The invention will be described further, by way of example only, with reference to the accompanying drawings, in which:
Figure 1 is a perspective view of a first embodiment an immobilising device in accordance with the invention;
Figure 2 is an exploded perspective view corresponding to Figure 1;
Figure 2A is an enlarged perspective view of part of a driving mechanism of the immobilising device;
Figure 2B is an exploded perspective view of part of the immobilising device;
Figure 3 is a diagrammatical front elevation of a modification of the first embodiment;
Figure 4 is a diagrammatical plan view of the modification;
Figure 5 is a front elevation of a second embodiment of an immobilising device in accordance with the invention;
Figure 6 is a rear elevation of the second embodiment;
Figure 7 is a rear perspective view of the second embodiment;
Figure 8 is a plan view of the second embodiment;
Figure 9 is a bottom plan view of the second embodiment;
Figure 10 is a schematic side view of a loading bay with safety apparatus for preventing a vehicle from being driven away during loading/unloading, in a first embodiment according to the invention;
Figure 11 is a view similar to Figure 10, with the safety apparatus connected to a parked trailer;
Figure 12 is a view similar to Figure 11, with use of the loading bay enabled;
Figure 13 is a table showing the various states of switches in the safety apparatus, corresponding to the situations of Figures 10 to 12;
Figure 14 is a diagrammatic representation of safety apparatus in a second embodiment according to the invention, using wireless communication;
Figures 14A and 14B show logical sequences used in the safety apparatus of Figure 14;
Figures 15 to 17 are views similar to Figures 10 to 12 respectively, but with the second embodiment of safety apparatus;
Figure 18 schematically shows a loading bay door and a switch unit forming part of the safety apparatus in one embodiment, the door being open;
Figure 19 is similar to Figure 18, but with the door closed;
Figure 20 shows a door bolt and a switch unit forming part of the safety apparatus in another embodiment;
Figure 21 is similar to Figure 20, but with the bolt trapped in the switch unit;
Figure 22 is a front elevation of a third embodiment of an immobilising device in accordance with the invention;
Figure 23 is a diagrammatic front elevation of a driving mechanism of the third embodiment;
Figure 24 is a plan view of the third embodiment;
Figure 25 is an enlarged view of part of Figure 22;
Figure 26 is an enlarged view of part of Figure 24;
Figure 27 is a diagrammatic front elevation of a fourth embodiment of an immobilising device in accordance with the invention;
Figure 28 is a diagrammatic plan view of the fourth embodiment;
Figure 29 is a perspective view of the left-hand end of the fourth embodiment;
Figure 30 is a perspective view of the right-hand end of the fourth embodiment; and
Figure 31 is a rear elevation of part of the fourth embodiment.

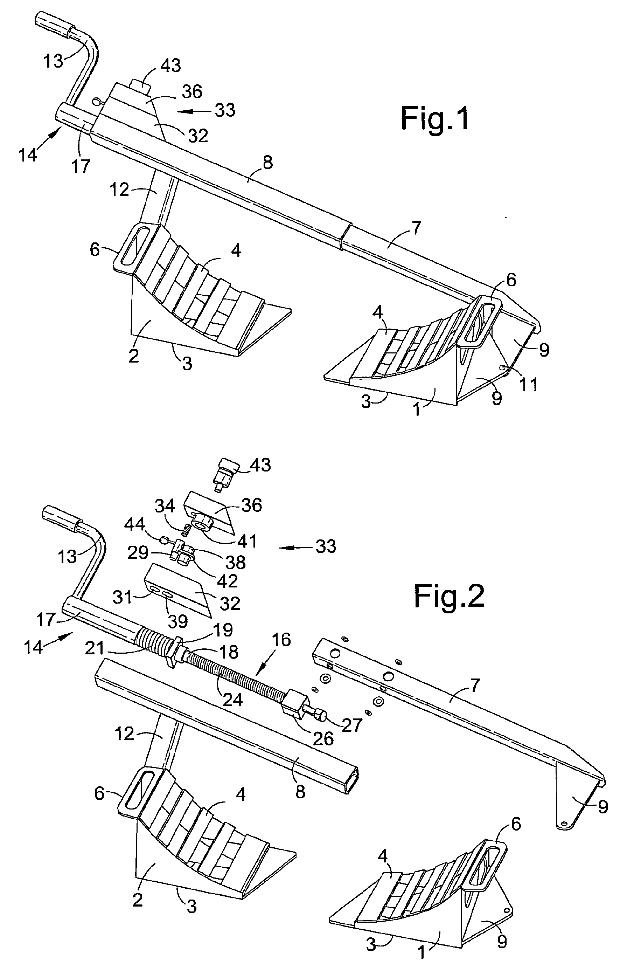

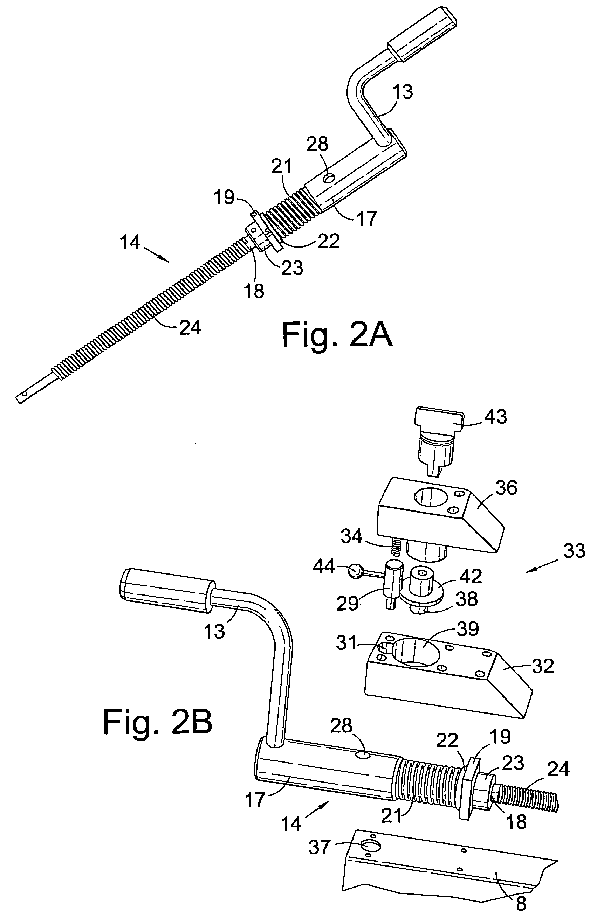

The immobilising device, also referred to below as a safety device, illustrated in a first embodiment in Figures 1 to 4, comprises a first member 1 engageable with a first portion of a vehicle wheel (not shown), this portion being part of the tread of the tyre of the wheel near the location at which the tyre is in contact with the ground. A similar second member 2 is engageable with a second portion of the wheel; in this embodiment that portion is part of the tread of the tyre on the opposite side of the ground contact location.

The two members 1, 2 are each in the form of a chock, being wedge-shaped, and having a flat base 3 and an inclined upper surface 4 which, as shown, is preferably concave. Each chock 1, 2 has a lug 6 to facilitate handling. The chocks 1, 2 are mounted on respective elongate supports 7, 8 in the form of tubes which are preferably of polygonal section, more preferably rectangular section or square section, as shown. One support 7 is telescopically slidable within the other.

The first chock 1 is connected to the support 7 by a pair of overlapping plates 9 and a pivot 11 so that the chock is swivellable, for a reason mentioned below. The second chock 2 is rigidly fixed to the support 8 by an arm 12; alternatively, it could be articulated to the arm, for the same reason that the first chock 1 is articulated to the support 7. The plates 9 and the arm 12 extend upwards at an angle away from the chocks 1, 2, and the supports 7, 9 extend upwards at an angle away from the first chock 1, so that access to a handle 13 at the end of the support 8 is facilitated.

The handle 13 is used to turn a shaft 14 of a driving mechanism 16 for moving the supports 7, 8 (and with them the chocks 1, 2) relative to each other. The shaft 14 has an enlarged proximal end portion 17, which extends into the hollow support 8, and a thinner operative portion 18, which extends through a square stop-plate 19 fixed in the support 8. A helical compression spring 21 is confined between the shoulder formed by the enlarged end portion 17 and a washer 22 abutting against the stop-plate 19. A stop-collar 23 fixed on the shaft 14 abuts against the side of the stop-plate 19 opposite the spring 21.

The operative portion 18 of the shaft 14 is provided with a screw thread 24 (in particular a multi-start thread) which engages with a square-section nut 26 fixed in the hollow support 7. Two (or more) fixing positions are provided to allow for different wheel sizes. A stop 27 fixed on the distal end of the shaft 14 prevents the nut 26 from leaving the thread 24. Turning the handle 13 in the appropriate direction causes the support 7 to be drawn into the support 8 so that the chocks 1, 2 are pulled towards each other and into engagement with the vehicle wheel to be immobilised.

As the reactive force from the wheel increases, the spring 21 becomes increasingly compressed (and the stop-collar 23 leaves contact with the stop-plate 19) until a blind bore 28 in the proximal end portion 17 of the shaft 14 comes into register with an auxiliary pin 29, which is slidable mounted in a bore 31 in the lower block 32 of a locking assembly 33 mounted on the support 8. The auxiliary pin 29 is spring-loaded by an auxiliary compression spring 34 abutting against the upper block 36 of the locking assembly 33, so that the pin 29 enters the bore 28, through a hole 37 in the support 8, thereby preventing turning of the handle 13 (and consequently preventing movement of the chocks 1, 2 away from each other).

A lock shaft 38 is rotatable mounted in bores 39, 41 in the lower block 32 and the upper block 36, respectively, in parallel with the pin 29. The lock shaft 38 has a lock disk (or blocking element) 42 with a cut-out through which the pin 29 extends (before it drops into the bore 28), so that the pin 29 prevents rotation of the lock shaft 38. As soon as the pin 29 has dropped into the bore 28, a recess in the pin 29 comes into register with the lock disk 42, so that the lock shaft 38 can then be turned by a key 43 to a position in which the lock disk 42 blocks retraction of the pin 29 from the bore 28.

The key 43 is trapped in the lock assembly 33 until it can be turned to block retraction of the pin 29. Thereupon, the key 43 can be removed and used to enable use of a loading bay. This is more fully described in our European patent application EP-A-1 493 620.

The strength of the spring 21 is chosen such that when the bore 28 has come into register with the auxiliary pin 29, the force applied to the chocks 1, 2 by the driving mechanism 16 is sufficient to prevent a person from removing the chocks from the vehicle wheel. When the key 43 is subsequently used to turn the lock shaft 28 so that the cut-out in the lock disk 42 is in register with the pin 29, the pin can be pulled up out of the bore 28 by lifting a projecting arm 44 fixed to the pin. The handle 13 can then be turned to release the chocks 1, 2 from the wheel.

The chock 1 is articulated to the support 7 by the pivot 11 so as to make it difficult for a person to apply the immobilising device to an object other than a vehicle wheel (e.g. a block of wood) and thereby allow the key 43 to be released in an unauthorised manner.

In a possible modification, the second chock 2 may be replaced by a bar or other member which can either bear against the periphery of the wheel at a position diametrically opposite the first chock 1 or bear against the inside of the rim of the wheel, for example. To facilitate fitting to the wheel, the bar may be hinged to the elongate support 8 about a longitudinal axis.

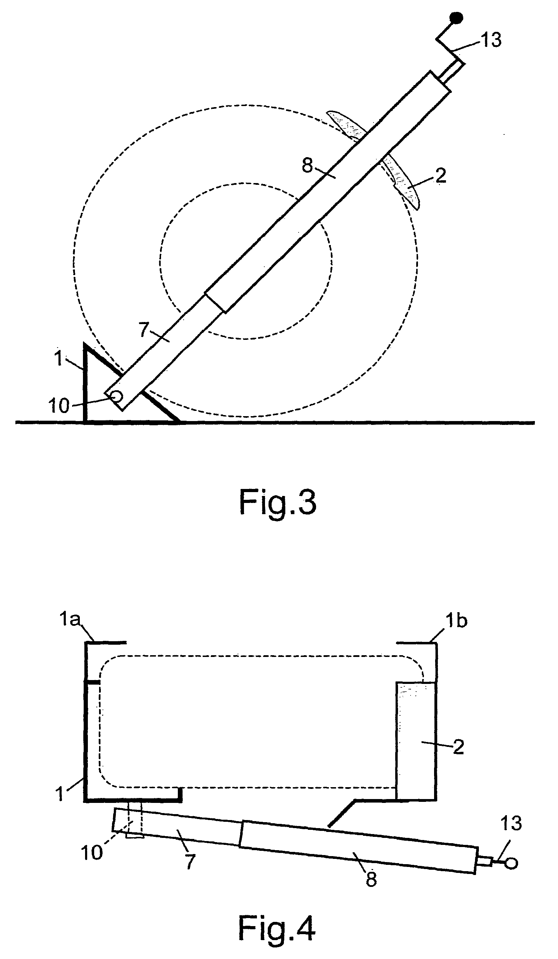

Figure 3 and 4 show one version of this modification, in which the second member 2 is an arcuate member which is fixed to the support 8 and bears against the tyre at a position diametrically opposite the first member or chock 1. The chock 1 is connected to the support 7 by a pivot 10 with a pivot axis parallel to the wheel axis, so that the immobilising device can be used on either side of the wheel, facilitating its use on left-hand and right-hand drive vehicles. Another feature of this version is that the first and second members 1, 2 are provided with respective extensions 1a, 2a which return behind the wheel and further inhibit removal of the immobilising device from the wheel (in addition to the force applied to the tyre by the members 1, 2).

In another possible modification, the driving mechanism could utilise a lever arrangement instead of a screw-threaded arrangement.

In the above-described embodiment, the compression spring 21 constitutes a means for detecting the force applied to the vehicle wheel. It will be appreciated that a similar spring or a spring acting in tension could be arranged at any convenient location in the mechanical connection between the driving mechanism and the wheel. Furthermore, any other force detecting means, e.g. a load cell, could be used instead of a spring and could be arranged to operate the auxiliary pin by way of any suitable connection, e.g. a mechanical or electromechanical connection. Similarly, the driving mechanism is not limited to a screw mechanism but may be any convenient mechanism, whether mechanical, electromechanical, pneumatic, or hydraulic, which can move the first and second members (chocks 1, 2) towards and away from each other.

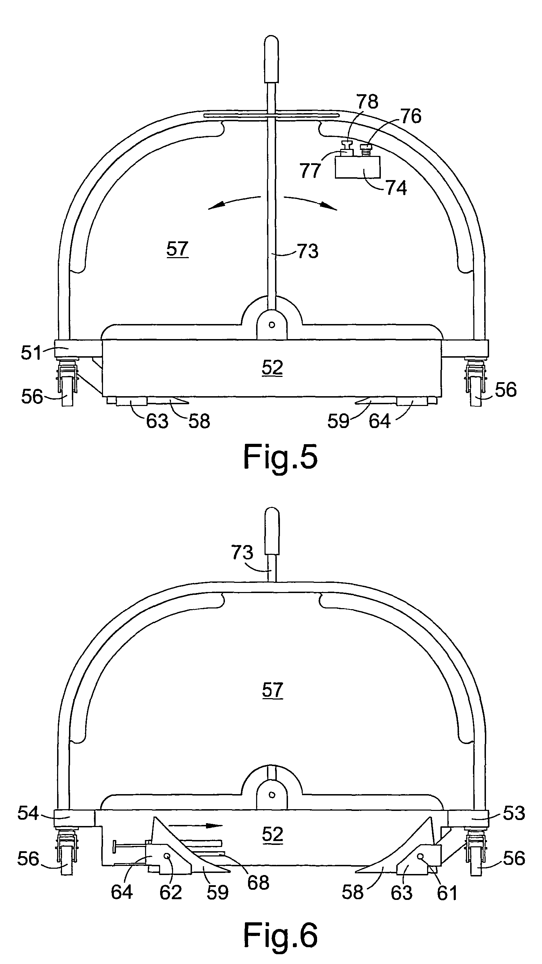

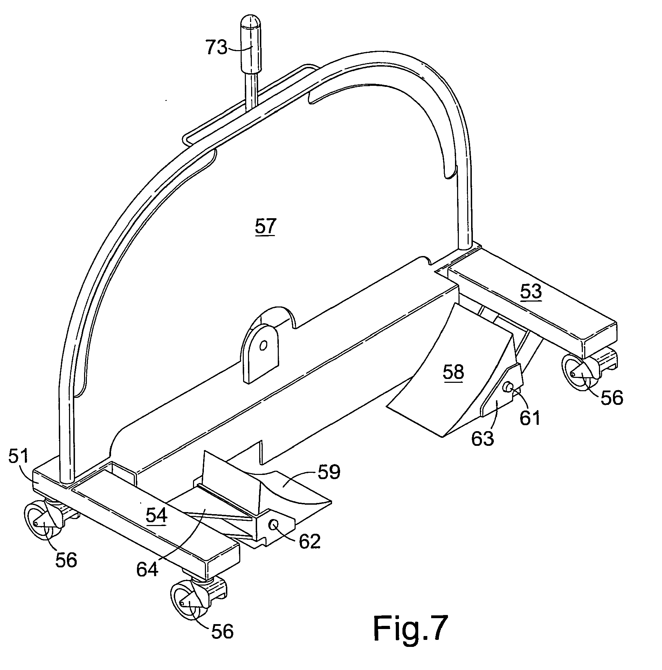

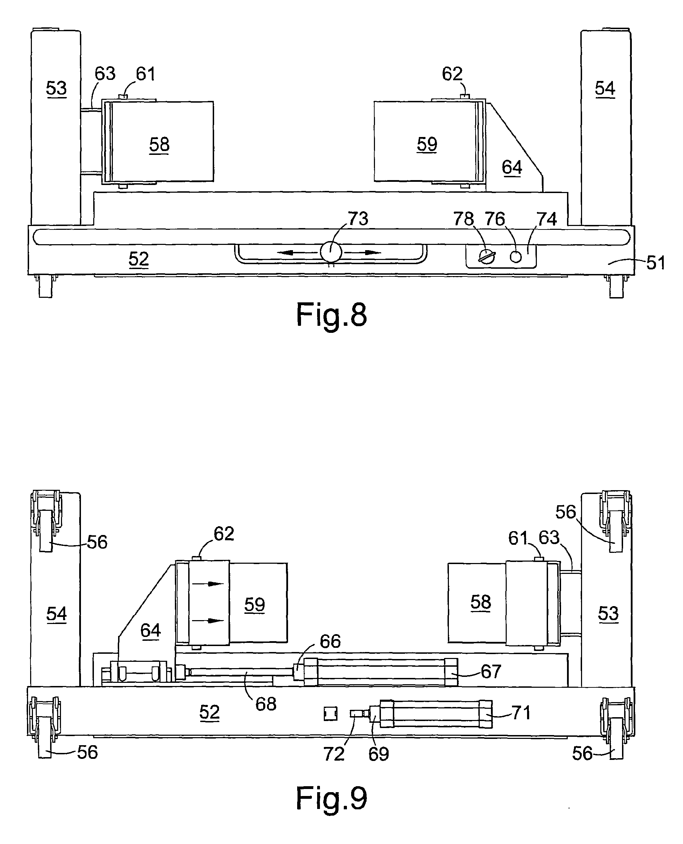

Figures 5 to 9 show a second embodiment of the immobilising device, in which a pneumatic drive is used to move the first and second members. The device resembles a wheel clamp and comprises a base frame 51, having an elongate front part 52 and a pair of side parts 53, 54, mounted on four castors 56. A front panel 57 rises from the front part 52 and prevents tampering.

The immobilising device has a fixed chock 58 and a movable chock 59. The chocks 58, 59 are connected by respective pivots 61, 62 to respective supports 63, 64. The support 63 is fixed to on side part 53 of the base frame 51. The support 64 is connected to a driving mechanism constituted by a pneumatic piston-and-cylinder device 66. Compressed air fed to the cylinder 67 forces the piston 68 into the cylinder and causes the chock 59 to be drawn towards the chock 58. The compressed air is generated manually by a reciprocating pump 69 comprising a cylinder 71 containing a piston 72 driven back and forth by a handle 73 pivotally mounted on the front panel 57. The air circuit is not shown.

The air circuit including the cylinders 67, 71 passes through a control block 74 mounted on the outside of the front panel 57. The control block 74 includes a pressure-sensitive valve and a pressure relief valve, the latter being actuable by a push button 76 which can be blocked by a locking device 77 operated by a key 78 (similar to the key 43 described above).

To immobilise a vehicle wheel, the immobilising device is pushed towards the wheel (on the left or right side of the vehicle) so that the chocks 58, 59 are on either side of the ground contact area. The handle 73 is then operated to cause the pump 69 to supply compressed air to the driving device 66. As the chock 59 comes into contact with the tyre and continues to apply pressure to the tread, this causes the other chock 58 to be drawn towards the tyre. The air pressure builds up in the system until it is sufficient to prevent a person from pulling the immobilising device off the wheel. This pressure operates the pressure-sensitive valve in the control block 74, causing it to actuate a pin so as to allow turning of the key 78.

The key 78 is trapped in the locking device 77 until it is turned to block the push button 76. The pneumatic circuit then remains pressurised while the key 78 is removed and used to enable use of a loading bay to load/unload the vehicle. When the loading bay is subsequently disabled, the key 78 is returned to the vehicle driver, who uses it to unblock the push button 76, which is then depressed to operate the relief valve and depressurise the pneumatic circuit, thus allowing the immobilising device to be removed from the wheel.

The driving cylinder 67 is provided with an over-travel valve (not shown) which releases air from the cylinder if the piston 68 travels too far into the cylinder, thereby preventing someone from operating the immobilising device and releasing the key 78 while the device is not fitted to a wheel. Similarly, if the device is fitted to an unauthorised object such as a spacer block, the chocks 58, 59 will pivot on their supports 63, 64, allowing the over-travel valve to operate.

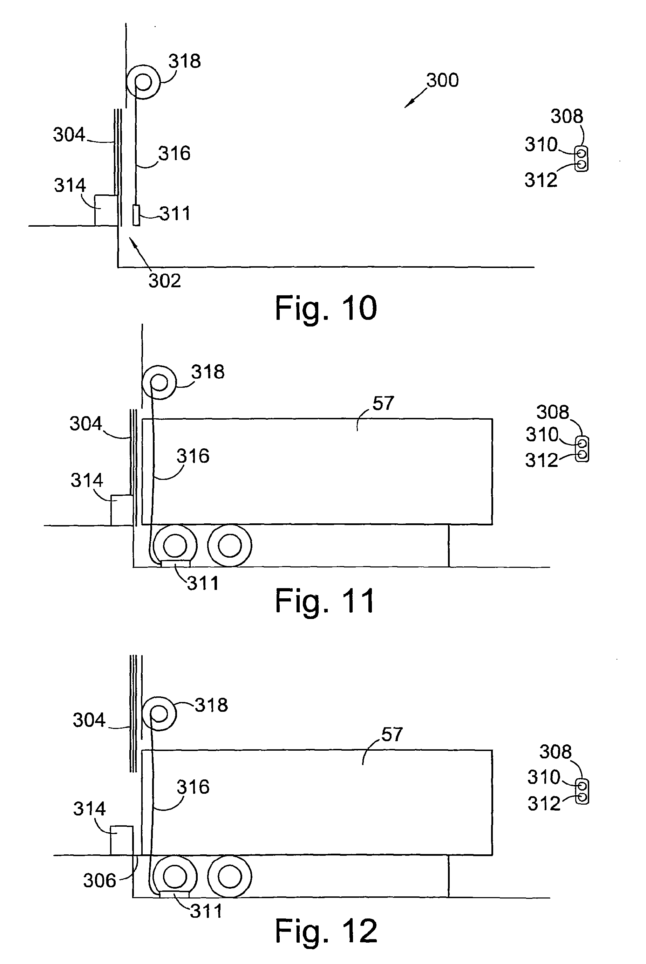

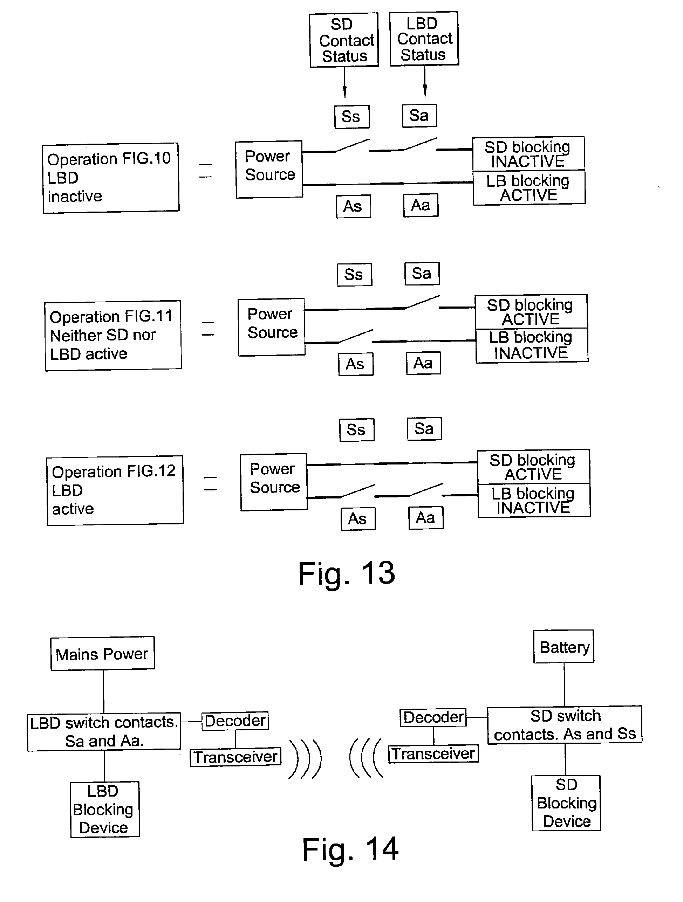

Figures 10 to 12 show a loading bay 300 with a first embodiment of safety apparatus 302 in accordance with the invention. The loading bay 300 includes a door 304, a dock leveller 306, and a set of traffic lights 308 having a red light 310 and a green light 312. The safety apparatus 302 comprises a safety device (SD) 311 in the form of a wheel immobilising device and a loading bay device (LBD) 314 for enabling/disabling use of the loading bay 300 for loading or unloading. These two devices are described in more detail below.

The safety device 311 is fixed to the free end of an umbilical cable 316 wound on a reel 318 which automatically retracts the cable to a position (Fig. 10) in which the safety device 311 is clear of the ground. The cable 316 is connected to the loading bay device 314 by further cabling (not shown).

The safety device 311 includes a (first) blocking device having an unblocking state, allowing the safety device to be fitted to (and removed from) the wheel, and a blocking state, preventing removal of the safety device from the wheel. The loading bay device 314 includes a (second) blocking device (described in more detail below) having a blocking state, preventing the loading bay device from enabling use of the loading bay 300, and an unblocking state, allowing the loading bay device to enable use of the loading bay. For control of the first and second blocking devices, the safety device (SD) 311 has two switch contacts As and Ss and the loading bay device (LBD) 14 has two switch contacts Aa and Sa. The control logic for activating the blocking devices in the various stages of operation (shown in Figs. 10 to 12) is shown in Figure 13.

In Figure 10 the loading bay 300 is not in use. The SD contact Ss and the LBD contact Sa (connected in series in the supply line to the SD blocking device) are open (so that the SD blocking device is in the unblocking state), and the SD contact As and the LBD contact Aa (connected in series in the supply line to the LBD blocking device) are closed (so that the LBD blocking device is in the blocking state). The loading bay device 314 locks the door 304 closed, illuminates the green traffic light 312, and isolates the dock leveller 306 from the power supply. Indicator lights (not shown) on the safety device 311 and the loading bay device 314 are green.

In Figure 11 a trailer unit 570 has been parked at the loading bay 300 and the safety device 311 has been fitted on to the brake coupling. A locking device on the safety device 311 is operated manually, closing the SD contact Ss and opening the SD contact As. Power is thus supplied to the LBD blocking device, changing it to the unblocking state, so that the loading bay device is allowed to enable use of the loading bay. Indicator lights on the safety device 311 and the loading bay device 314 are amber.

In Figure 12 the loading bay device 314 has been used to enable use of the loading bay by unlocking the door 304, switching on power to the dock leveller 306, and illuminating the red traffic light 310. This operation of the loading bay device 314 opens the LBD contact Aa and closes the LBD contact Sa. Power is supplied through the contacts Ss and Sa to the SD blocking device, changing it to the blocking state and thereby preventing the locking device from being moved from the locked position to the unlocked position. The indicator lights on the safety device 311 and the loading bay device 314 are red.

On completion of loading/unloading, the dock leveller 306 is retracted and disconnected from the power supply by the LBD, the door 304 is closed and locked by the LBD, the traffic lights 308 are changed to red by the LBD, and the LBD contact Aa is closed and LBD contact Sa is opened, so that power is no longer supplied to the SD blocking device, allowing the SD locking device to be unlocked and the safety device 311 to be removed from the wheel. This closes the SD contact As and opens the SD contact Ss, so that the loading bay is again in the condition shown in Figure 10.

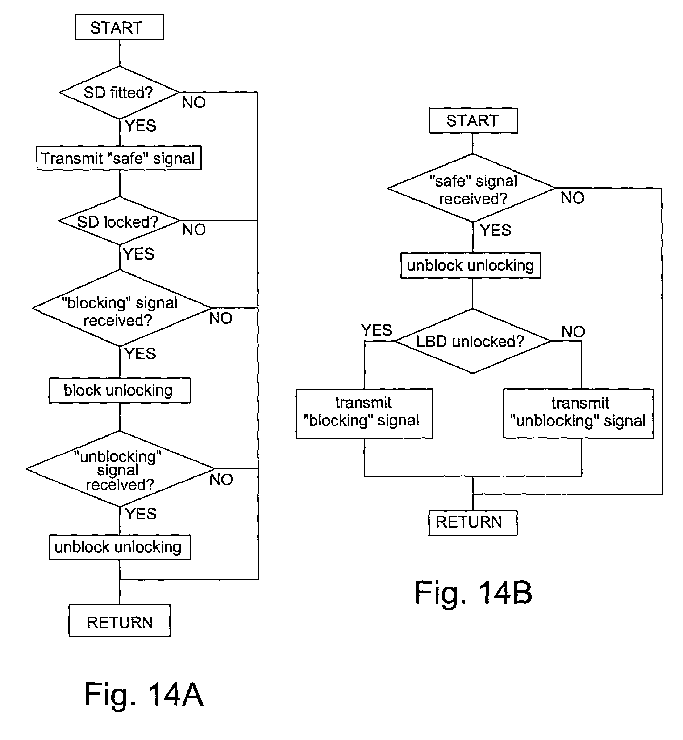

Figures 14 to 17 illustrate a second embodiment of the safety apparatus 302, which uses wireless communication instead of the umbilical cable. Referring to Figure 14, the loading bay device includes a transmitter/receiver (transceiver) and a decoder, as well as the above-mentioned contacts Sa and Aa and blocking device. The safety device includes a transmitter/receiver, a decoder, and a battery, as well as the above-mentioned contacts As and Ss and blocking device. Figure 5A shows the logical sequence followed by control circuitry in the safety device 311, and Figure 5B shows the logical sequence followed by control circuitry in the loading bay device 314.

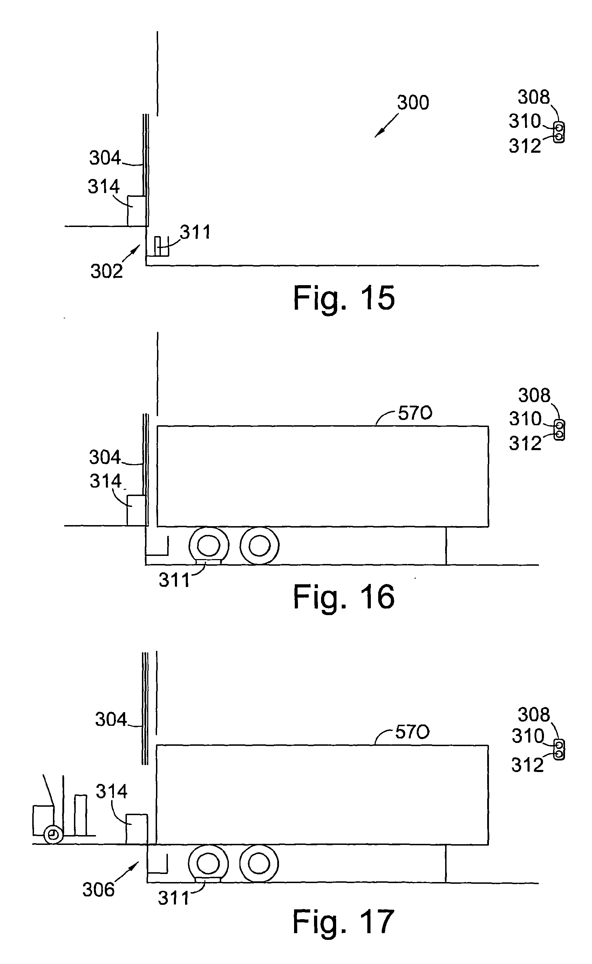

The above description of the operation of the safety device 311 and the loading bay device 314 with reference to Figures 10 to 14 also applies to the operation with reference to Figures 15 to 17.

The radio signal transmitted between the safety device 311 and the loading bay device 314 includes a code specific to the loading bay 300. The safety device 311 includes a "low battery power" warning light (not shown). The safety device 311 transmits a signal periodically, irrespective of whether it is fitted to a wheel; this signal can be used to locate the device if it removed from its normal location and/or trigger an alarm at a boundary of the loading bay.

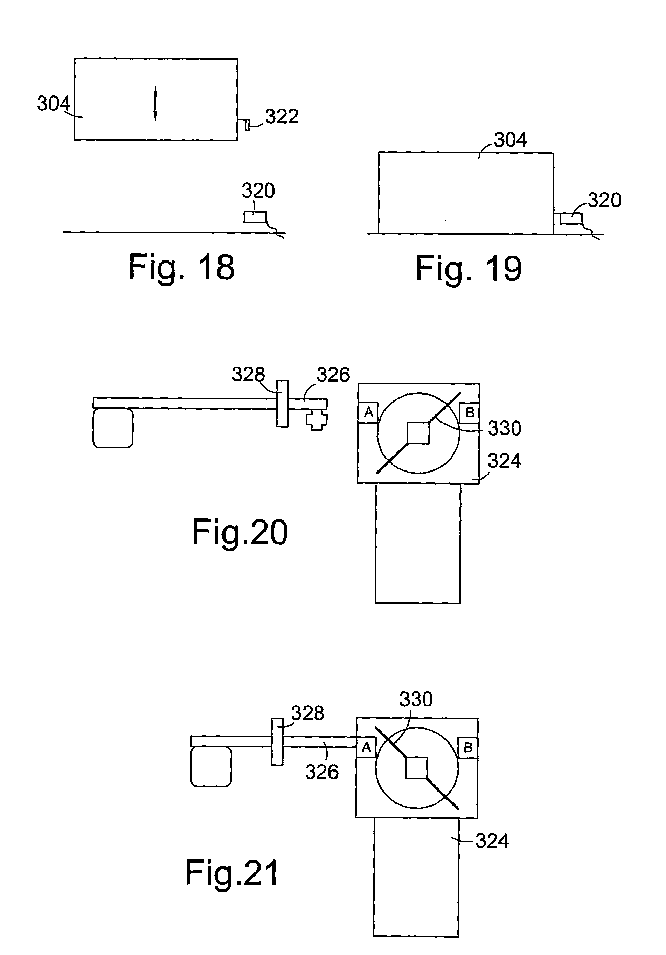

Figures 18 and 19 show an embodiment in which the loading bay device includes a switch unit 320 which receives a tongue 322 attached to the loading bay door 304. When the door is closed (Fig. 19) the tongue 322 enters the switch until 320 and operates a number of electrical contacts which are used to switch power to and from the dock leveller 306 and traffic lights 308. In addition the switch until 320 has the above-mentioned contacts Aa and Sa. The tongue 322 is trapped in the switch unit 320 until released by a blocking device such as a solenoid.

Figures 20 and 21 shows another type of switch unit 324, which can receive a manually operated bolt 326 mounted in a bracket 328 on the loading bay door 304. The switch until 324 is mounted on the door frame and contains a number of electrical contacts which are operated by means of a two-position knob 330 and are used to switch power to and from the dock leveller 306 and traffic lights 308. When the door 304 is closed the bolt 326 is inserted into the switch unit 324 (Fig. 21). The switch unit 324 also contains the above-mentioned contacts Aa and Sa and blocking device.

The knob 330 can only be moved between its two positions (A and B) when the blocking device is in the unblocking or inactive state and the bolt 326 is engaged in the switch unit 324. When the knob 330 is in position A (Fig. 21), the bolt 326 is trapped. The contacts Aa and Sa are operated in the above-described manner as a function of the position of the knob.

The safety device 311 described above can be adapted from either of the immobilising devices described above with reference to Figures 1 to 9, by replacing the key-operated locking devices by a sensing switch and a solenoid unit which locks the auxiliary pin 29 in place or closes the pressure relief valve in the control block 74 when the force applied by the driving mechanism reaches the required threshold.

Other blocking devices than solenoids may be used, e.g. piezoelectric devices.

As explained above, the dock leveller is retracted and stowed and the door is closed before the loading bay device switches off the power supply to them. Most loading bay systems require the dock leveller to be retracted before the door can be closed. In some circumstances the door may need to be independent of the loading bay device, in which case the loading bay device will be modified to lock and unlock the dock leveller in the stowed position, an "unblocking" signal being sent to the safety device only when the dock leveller is stowed; when the safety device is removed from the wheel, it sends a "blocking" signal to the loading bay device, ensuring that the dock leveller is locked in the stowed position as well as being isolated from the power supply.

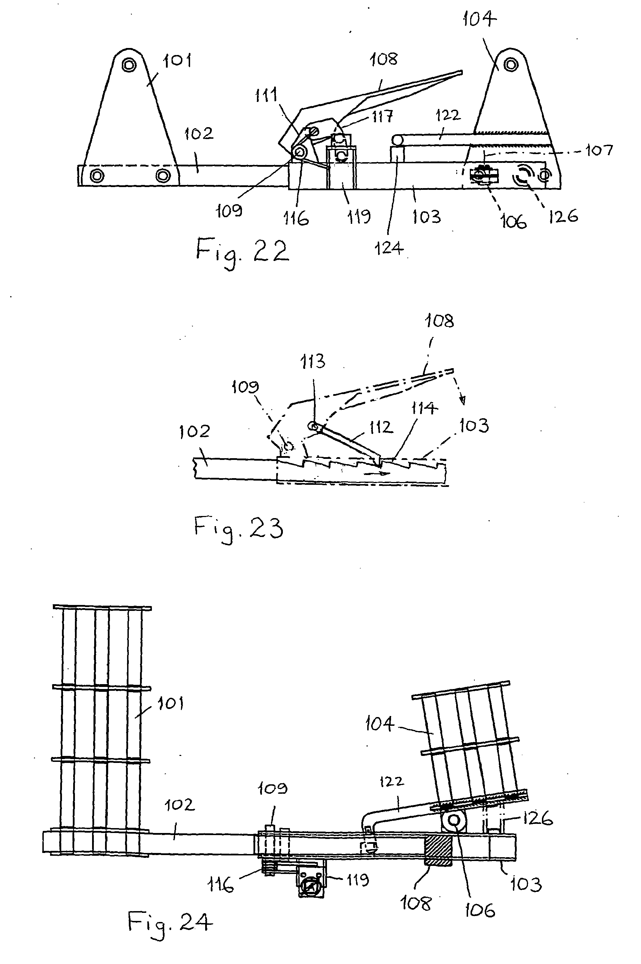

Figures 22 to 26 show a third embodiment of the immobilising device, in which a rack and pawl drive is used to move the first and second members towards each other and in which engagement with a vehicle wheel is detected by the movement of one member against spring resistance. The device comprises a first member or chock 101 fixed on a first elongate support 102 telescopically slidable in a second elongate support 103 on which a second member or chock 104 is mounted by means of a pivot 106 with a vertical axis 107.

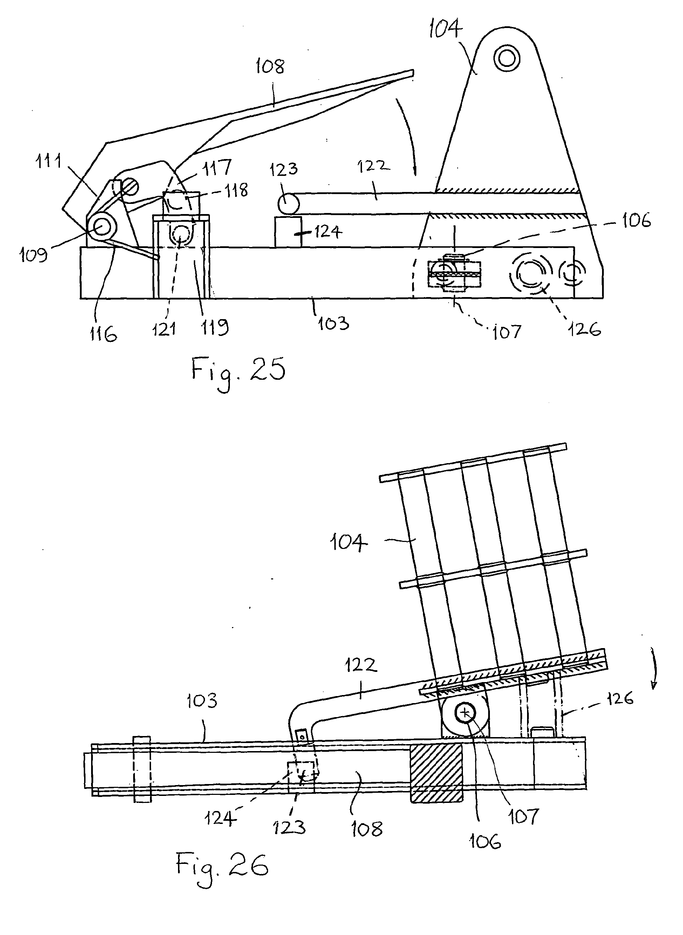

A foot-operated lever or pedal 108 is mounted by means of a horizontal pivot pin 109 on a bracket 111 fixed on the second support 103. A pawl 112, connected to the lever 108 by a pivot pin 113, acts on a ratchet 114, formed on the first support 102, so as to urge the first support into the second support 103 when the lever 108 is depressed, thereby moving the two chocks 101, 104 towards each other. The lever 108 is returned to its normal position (Figures 22 and 25) by a coil spring 116 around the pivot pin 109.

The lever 108 carries a fixed arm 117 having a round hole 118 intended to receive a round bolt 121 operated by a locking device 119. As described above with reference to the first embodiment, a key (not shown) is trapped in the locking device 119. When removed, the key can be used to enable use of a loading bay. In the present embodiment the key can only be removed from the locking device 119 when it has been turned so as to cause the bolt 121 to enter the hole 118. The arm 117 blocks the bolt 121 (preventing turning of the key) until the hole 118 is in register with the bolt.

The second chock 104 carries a fixed rod 122 with a bent end portion 123 which normally prevents the lever 108 from being depressed so far that the hole 118 is in register with the bolt 121. A block 124, fixed to the second support 103, supports the end portion 123 in its normal position (Figures 24 and 26). A compression spring 126 acts between the second support 103 and the second chock 104.

In use, the immobilising device is applied to a vehicle wheel and the chocks 101, 104 are pushed towards each other until they contact the wheel. Then the lever 108 is repeatedly depressed and released so that the pawl and rack mechanism (112, 114) telescopes the supports 102, 103 until the reaction of the wheel against the second chock 104 rotates it about the pivot axis 107 (against the action of the spring 126) sufficiently to move the end portion 123 of the rod 122 out of the path of the lever 108. The lever 108 can then be abutted against the block 124, in which position the hole 118 is in register with the bolt 121 and the key can therefore be turned in the locking device 119 to insert the bolt 121 into the hole 118, thereby locking the lever 108 in its lowermost position, in which the pawl 112 remains in engagement with the rack 114 so as to prevent moving apart of the chocks 101, 104.

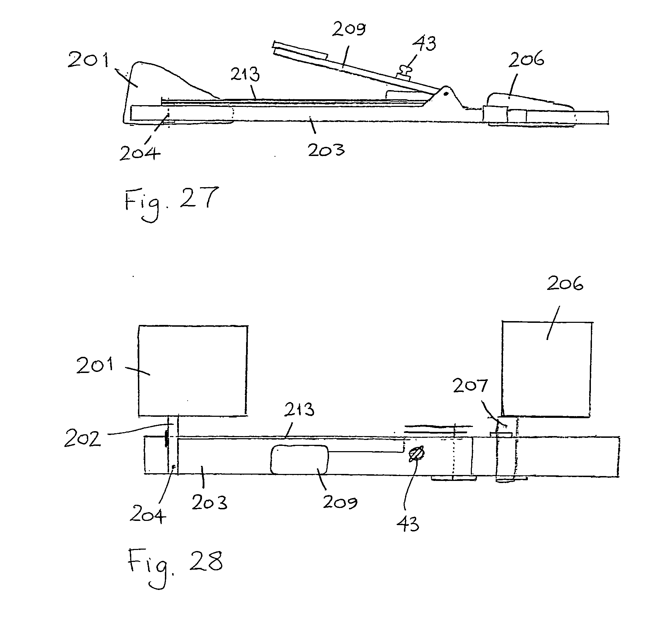

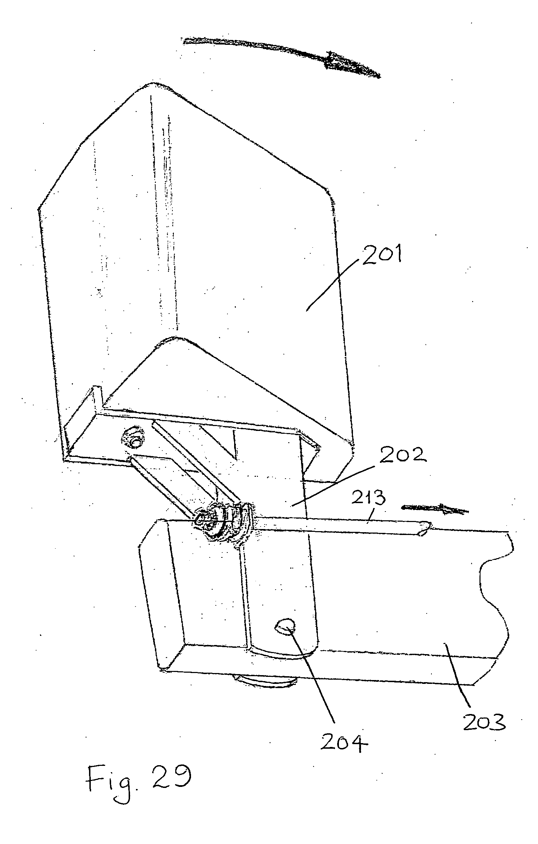

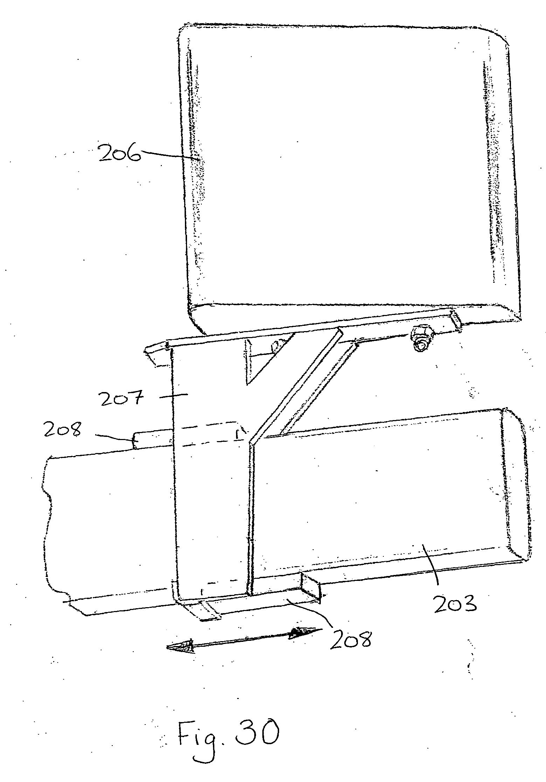

Figures 27 to 31 show a fourth embodiment of the immobilising device, in which a lever and a linkage are used as a driving mechanism to move the first and second members towards each other and in which engagement with a vehicle is detected by relative movement of parts of the linkage against spring resistance. The device comprises a first member or chock 201 fixed on a bracket 202 which is pivotably connected to an elongate support 203 by a vertical pivot pin 204. A second member or chock 206 is fixed on a bracket 207 including a pair of guide shoes 208 which are slidably along the support 203 but which lock into frictional engagement with the support 203 if a force is applied to the second chock 206 tending to cant it relative to the elongate support 203.

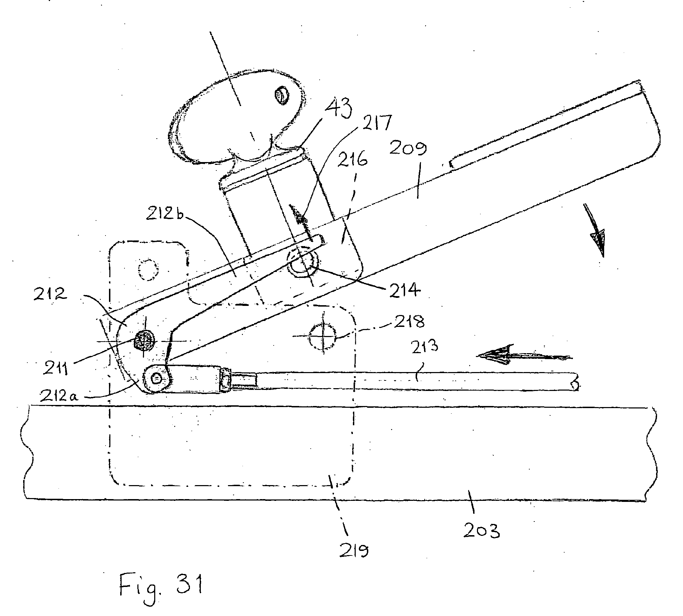

A foot-operated lever or pedal 209 is mounted on the support 203 and is connected by a torsion bar 211 (serving as a torsion spring) to an L-shaped plate 212, the shorter leg 212a of which is connected to one end of a tie bar 213, the other end of which is connected to the bracket 202 carrying the first chock 201. The longer leg 212b of the L-shaped plate 212 normal obstructs the path of a bolt 214 operated by a locking device 216 mounted on the lever 209. As described above with reference to the first embodiment, a key 43 is trapped in the locking device 216. In the present embodiment the key 43 can only be removed from the locking device 216 when it has been turned to cause the bolt 214 to project from the locking device 216, which is only possible when the L-shaped arm 212 has turned sufficiently far (relative to the lever 209, as indicated by the arrow 217 in Figure 31) against the torsional resistance of the torsion bar 211.

In use, the immobilising device is applied to a vehicle wheel, the first chock 201 is placed in contact with one side of the wheel, and the second chock 206 is slid along the support 203 until it contacts the other side of the wheel. Then the lever 209 is pushed down so that the first chock 201 is pulled towards the second chock 206 via the linkage (211-213). The resistance of the wheel against the first chock 201 increases the tension in the tie bar 213, thereby causing the torsion bar 211 to twist so that the longer arm 212b of the plate 212 moves in the direction of the arrow 217. At the same time, the bolt 214 comes into register with a hole 218 in a catch plate 219 fixed to the support 203. If the reaction of the wheel against the chocks is sufficiently great, the arm 212b no longer obstructs the bolt 214 and the key 43 can be turned to cause the bolt 214 to enter the hole 218, thereby locking the lever 209 in its lowermost position and preventing release of the chocks. If the reaction is not sufficient, the lever 209 is raised and the chocks are pushed manually towards each other to increase their pressure against the wheel before the lever 209 is depressed again.

## Claims

1. A device for immobilising a wheeled vehicle, comprising:
a first member (1; 58; 101; 201) engageable with a first portion of a vehicle wheel, the first portion being on the outer periphery of the wheel,
a second member (2; 59; 104; 206) engageable with a second portion of the wheel,
drive means (16; 66; 108, 112; 209, 211, 212, 213) for urging the first and second members towards each other so as to clamp part of the wheel between them,
detector means (21; 74; 126; 211) for detecting engagement of the first and second members with the wheel, and
auxiliary means (29; 74; 121; 214) operable to prevent movement of the first and second members away from each other, the auxiliary means being operable only when engagement of the first and second members with the wheel has been detected.

2. A device as claimed in claim 1, in which the detector means detects the force applied by the drive means, the auxiliary means being operable only when the force exceeds a threshold.

3. A device as claimed in claim 1 or 2, in which the first and second members are mounted on respective first and second supports (7, 8; 53, 64; 102, 103; 202, 203) which are movable by the drive means.

4. A device as claimed in claim 3, in which at least one of the first and second members is articulated to the corresponding support.

5. A device as claimed in any preceding claim, further comprising a blocking device (33; 77; 119; 216) having an unblocking state, allowing operation of the auxiliary means and cancellation of the said operation, and a blocking state preventing cancellation of the said operation.

6. A device as claimed in claim 5, in which the blocking device is changeable between the unblocking and blocking states by means of a key.

7. A device as claimed in claim 6, in which the blocking device prevents removal of the key until the blocking device has been changed from the unblocking state to the blocking state.

8. A device as claimed in any preceding claim, in which the detector means includes a spring (21; 126; 211).

9. A device as claimed in any preceding claim, in which the auxiliary means acts on the drive means.

10. A device as claimed in any preceding claim, in which the auxiliary means includes a latch.

11. Apparatus for preventing a vehicle from being driven away from a loading bay during loading/unloading, comprising:
an immobilising device (311) according to claim 1; and
a loading bay device (314) which is operable to selectively enable and disable use of the loading bay for loading/unloading;
the immobilising device (311) including a first blocking device having an unblocking state, allowing operation of the auxiliary means and cancellation of the said operation, and a blocking state preventing cancellation of the said operation;
the loading bay device including a second blocking device having a blocking state, preventing the loading bay device from enabling use of the loading bay, and an unblocking state allowing the loading bay device to enable use of the loading bay;
the apparatus including:
communication means (316) for communicating between the immobilising device and the loading bay device; and
control means for controlling the first and second blocking devices;
the control means being arranged to perform the following functions:
detecting the state of the first blocking device,
detecting the state of the second blocking device,
causing the second blocking device to change from the blocking state to the unblocking state when it is detected that the first blocking device has changed from the unblocking state to the blocking state, and
causing the first blocking device to change from the blocking state to the unblocking state when it is detected that the second blocking device has changed from the unblocking state to the blocking state.

12. Apparatus as claimed in claim 11, in which the immobilising device includes a first locking device which has a locked state, preventing cancellation of the said operation of the auxiliary means, and an unlocked state, the first blocking device in the blocking state preventing the first locking device in the locked state from changing to the unlocked state.

13. Apparatus as claimed in claim 11 or 12, in which the loading bay device includes a second locking device which has a locked state, preventing the loading bay device from enabling use of the loading bay, and an unlocked state, the second blocking device in the blocking state preventing the second locking device in the locked state from changing to the unlocked state.

14. Apparatus as claimed in any of claims 11 to 13, in which the loading bay device includes a switch for controlling supply of electrical power to an operating component of the loading bay.

15. Apparatus as claimed in any of claims 11 to 14, in which the loading bay device includes a locking device for locking a door and/or a dock leveller.

16. Apparatus as claimed in any of claims 11 to 15, in which the loading bay disabling device includes traffic lights.

17. Apparatus as claimed in any of claims 11 to 16, in which the immobilising device and/or the loading bay device includes an indicator for indicating the status of the device as a function of the states of the blocking devices.
